# EUROPÄISCHE PATENTSCHRIFT

(11) **EP 1 128 933 B1**
(45) Veröffentlichungstag und Bekanntmachung des Hinweises auf die Patenterteilung: **12.06.2002**
(21) Anmeldenummer: 99960873.0
(22) Anmeldetag: 09.11.1999
(51) Int. Cl.: B24B 31/06, F01D 5/00

(54) **ANORDNUNG ZUR FEINBEARBEITUNG VON ROTATIONSSYMMETRISCHEN BAUTEILEN**
SYSTEM FOR THE PRECISION MACHINING OF ROTATIONALLY SYMMETRICAL COMPONENTS
DISPOSITIF POUR L'USINAGE DE PRECISION DE COMPOSANTS A SYMETRIE DE REVOLUTION

(30) Priorität: 14.11.1998 DE 19852637
(43) Veröffentlichungstag der Anmeldung: 05.09.2001
(73) Patentinhaber: MTU Aero Engines GmbH, 80976 München (DE)
(72) Erfinder: KLEER, Arno, D-85247 Arnbach (DE); SCHÖLLNER, Rudolf, D-85229 Niederroth (DE); KARNOWSKI, Stefan, D-85757 Karlsfeld (DE)
(74) Vertreter: Baum, Wolfgang, Dipl.-Ing.
(86) Internationale Anmeldenummer: DE9903566
(87) Internationale Veröffentlichungsnummer: WO0029171

(56) Entgegenhaltungen:
- WO-A-85/02136
- GB-A- 1 067 656
- US-A- 3 464 163
- US-A- 4 689 921
- US-A- 4 706 414
- PATENT ABSTRACTS OF JAPAN vol. 009, no. 034 (M-357), 14. Februar 1985 (1985-02-14) & JP 59 175951 A (MITSUI ZOSEN KK), 5. Oktober 1984 (1984-10-05)

## Beschreibung

Die Erfindung betrifft eine Anordnung zur Feinbearbeitung von rotationssymmetrischen, scheiben- oder ringförmigen Bauteilen durch Gleitschleifen, gemäß dem Oberbegriff des Patentanspruches 1, (siehe z.B. US-A-4 706 414).

Aktuelle Entwicklungen auf dem Gebiet der Fluggasturbinentriebwerke zeigen eine deutliche Tendenz zur Verwendung von integral beschaufelten Rotoren, insbesondere im Verdichterbereich. Ausschlaggebend hierfür sind Forderungen nach geringerem Gewicht, höherer Festigkeit und geringerem Verschleiß, wodurch höhere Drehzahlen / höhere Leistung bzw. eine längere Lebensdauer möglich werden. Für die einzelnen Stufen solcher Rotoren, d.h. für integral beschaufelte Rotorscheiben, hat sich in Fachkreisen die Bezeichnung "Blisk", abgeleitet von "Bladed Disk", durchsetzt. Bei größeren Blisks werden die Schaufeln in der Regel separat gefertigt, z.B. durch Schmieden oder Gießen, und mittels geeigneter Schweißverfahren, z.B. mittels linearem Reibschweißen, mit der Scheibe verbunden, wobei letztere häufig ein Schmiedeteil ist. Kleinere bis mittlere Blisks werden in der Regel aus dem "Vollen" hergestellt, d.h. aus einem Rohteil. Die Scheibenkontur läßt sich bis hin zur Feinbearbeitung großteils durch Drehen erzeugen. Der geometrisch anspruchsvolle Schaufelbereich wird vorzugsweise durch mehrdimensionales Fräsen erzeugt, wobei allerdings die aus aerodynamischen und festigkeitstechnischen Gründen erforderliche Oberflächenfeinheit und -genauigkeit noch nicht vollständig erreicht wird ("Fräszeilen"). Deshalb ist hier eine abschließende Feinbearbeitung erforderlich. Doch auch bei größeren, geschweißten Blisks oder anderen Bauteilen, wie Scheiben, Leitschaufelkränzen etc., kann eine abschließende Feinbearbeitung erforderlich bzw. vorteilhaft sein.

Ein vielversprechendes Verfahren hierzu ist das flüssigkeitsunterstützte Gleitschleifen, welches in bevorzugter Version eine Kombination aus mechanischem Schleifen und chemischem Abtragen (stromlos, d.h. ohne externe Stromquellen) darstellt. Hierbei wird durch mechanische Schwingungen eines Behälters eine Relativbewegung zwischen einer Vielzahl loser Schleifkörper und dem Werkstück erzeugt, wobei zusätzlich eine Benetzung der Schleifkörper und somit des Werkstücks mit einem metallösenden, in der Regel saueren Flüssigmedium erfolgt. Mit diesem Verfahren lassen sich Oberflächen glätten, Grate entfernen, Kanten verrunden etc..

Bekannte Anbieter dieser Technologie sind die Firma REM, speziell im deutschen Raum die Firma OSRO. Über diese Anbieter ist eine spezielle Anordnung zur Feinbearbeitung von Blisks bekannt geworden, welche einen im wesentlichen rechteckigen, schwingenden Behälter mit einem oben offenen, trogartigen Volumen für die abrasive Füllung verwendet. Die von einem Unwuchtrotor induzierten Behälterschwingungen erzeugen eine quasi-kontinuierliche Umwälzbewegung der abrasiven Füllung einschließlich einer Bewegungskomponente in Längsrichtung des "Troges". Die zu bearbeitende, integral beschaufelte Rotorscheibe, d. h. der Blisk, ist mit horizontaler, quer zur Behälterlängsrichtung stehender Achse frei drehbar in definierter Höhe in der Weise mittig über dem Behälter positioniert, daß sie mit ihrem jeweils unteren Bereich segment-förmig in die Behälterfüllung eintaucht, wobei die Eintauchtiefe etwa der radialen Schaufelhöhe entspricht. Infolge der genannten Längsbewegungskomponente der abrasiven Behälterfüllung wird die Rotorscheibe nach Art eines "unterschlächtigen Mühlrades", d.h. eines mit seinem Unterteil in eine Strömungsrinne eintauchenden Wasserrades, automatisch in Drehung versetzt, so daß bei jeder Umdrehung ihr gesamter beschaufelter Umfang mit der abrasiven Füllung in Kontakt kommt. Nachteilig hierbei ist das ungünstige Verhältnis von Bearbeitungszeit zu "Leerzeit" für jede Schaufel, da sich geometrisch bedingt jede Schaufel über den Großteil einer Scheibenumdrehung nur "nutzlos" durch die Luft bewegt. Während dieser "Luftphase" wirkt nur die anhaftende, metallösende Flüssigkeit in eher unkontrollierter Weise auf die Oberfläche ein. Alleine schon deshalb ist eine Vielzahl von Umdrehungen, d.h. eine lange Bearbeitungsdauer, bis zum Erreichen der gewünschten Oberflächengüte erforderlich. Hinzu kommt, daß die Kinematik dieser "Mühlradanordnung" eher schwache Relativbewegungen zwischen Werkstück und Füllung erzeugt, was die Bearbeitungsdauer weiter in die Länge zieht. Während nämlich der Behälter selbst relativ kräftig schwingt /rüttelt, bewegt sich die flüssigkeitsgetränkte Schleifkörperfüllung trägheitsbedingt nach Art einer hochviskosen Flüssigkeit ohne effektive Schwingungsanteile, d.h. mit einer eher trägen, gerichteten Fließbewegung. Da das Bauteil/der Blisk vom Behälter entkoppelt ist und sich an seiner stillstehenden Halterung nur langsam dreht, ergeben sich insgesamt nur schwache, abtragende Relativbewegungen. Als Vorteil einer solchen Anordnung wäre zu nennen, daß das Behälter- und somit das Füllungsvolumen in Relation zur Bauteilgröße minimiert werden kann.

Hiervon ausgehend besteht die Aufgabe der Erfindung darin, eine Anordnung für das flüssigkeitsunterstützte Gleitschleifen von rotationssymmetrischen, scheiben- oder ringförmigen Bauteilen anzugeben, welche durch Optimierung des Abtragungsprozesses wesentlich kürzere Durchlaufzeiten je Bauteil ermöglicht und dadurch wirtschaftlicher arbeitet.

Diese Aufgabe wird durch die im Anspruch 1 gekennzeichneten Merkmale gelöst, in Verbindung mit den gattungsbildenden Merkmalen in dessen Oberbegriff.

Das Wesen der Erfindung ist darin zu sehen, daß das scheiben- oder ringförmige Bauteil horizontal liegend im Behälter angeordnet und fest/starr mit diesem verbunden oder aber um seine Achse drehbar, im übrigen aber ebenfalls fest mit dem Behälter verbunden ist, wobei alle zu bearbeitenden Oberflächen ständig mit der abrasiven Füllung in Kontakt stehen. Die Behälterform ist dem Bauteil angepaßt und somit rotationssymmetrisch, wobei eine das Bauteil bedeckende Befüllung ermöglicht ist. Somit gibt es keine "Leerzeiten" während der Bearbeitung. Infolge der steifen Verbindung des Bauteils mit dem Behälter führt ersteres die selben Schwingungsbewegungen aus wie letzterer, ggf. mit einer zusätzlichen Drehbewegung. Die massenträge Füllung steht demgegenüber - abgesehen von einer langsamen, gerichteten Umwälzbewegung - quasi still, so daß die Schwingungsamplituden von Behälter und Werkstück/Bauteil praktisch vollständig in abrasiv wirksame Relativbewegungen umgesetzt werden. Dadurch wird die gewünschte Materialabtragung in erheblich kürzerer. Zeit erzielt.

In den Unteransprüchen sind bevorzugte Ausgestaltungen der Anordnung nach dem Hauptanspruch gekennzeichnet.

Die Erfindung - einschließlich einer bekannten Lösung - wird anschließend anhand der Zeichnungen noch näher erläutert. Dabei zeigen in vereinfachter, mehr schematischer Darstellung:
Figur 1 einen - vertikalen - Längsmittelschnitt durch eine Anordnung gemäß der Erfindung mit einem Blisk als Werkstück/Bauteil,
Figur 2 einen vergleichbaren Schnitt durch eine Anordnung nach dem Stand der Technik.

Die Anordnung 1 läßt sich unterteilen in das zu bearbeitende Bauteil, hier gebildet von einer Rotorscheibe 3 mit integraler Beschaufelung 5, in die abrasive Füllung 7 aus einer Vielzahl von definierten Schleifkörpern und aus einer die Schleifkörper benetzenden, hier speziell metallösenden Flüssigkeit sowie in den die vorgenannten Elemente aufnehmenden und tragenden Behälter 9. Der Behälter 9 ist - zumindest weitgehend - rotationssymmetrisch ausgeführt und horizontal, d.h. mit vertikal stehender Achse Z angeordnet, wobei seine Lagerung 11 begrenzt horizontale und vertikale Schwingungsbewegungen zuläßt. Diese Bewegungen werden von einem Unwuchtrotor mit Antrieb 13 erzeugt, welcher koaxial an der Behälterunterseite angeordnet ist. Im Behälterinneren ist eine mittige Erhebung 17 vorhanden, welche die Rotorscheibe 3 horizontal liegend trägt und somit zu deren Halterung 15 gehört. Die Halterung 15 soll in Relation zum Behälter 9 starr sein, was hier u.a. durch eine Schraubverbindung 18 erreicht wird, damit die beschaufelte Rotorscheibe die selben schwingenden/taumelnden Bewegungen ausführt, wie der Behälter 9. Die abrasive Füllung 7 soll zumindest so hoch im Behälter 9 stehen, daß die zu bearbeitenden Oberflächen des Werkstücks vollständig bedeckt sind. In der Regel gilt die Feinbearbeitung der Beschaufelung 5 sowie ggf. dem Übergangsbereich von den Schaufeln zur Rotorscheibe 3. Die Behälterinnenform ist auch so gewähft, daß die Beschaufelung 5 allseitig in ein ausreichendes Volumen an abrasiver Füllung 7 eingebettet ist. Die Pfeile im Inneren der Füllung 7 deuten an, daß sich hier infolge der Behälterschwingung eine eher langsame, gerichtete und kontinuierliche Fließbewegung einstellt in Form einer konzentrisch um die Achse Z herum veriaufenden, d.h. kreisförmig gekrümmten und in sich geschlossenen, endlosen Schraubenlinie. Es wurde bereits erläutert, daß die träge Füllung als ganzes den schnellen Schwingungsbewegungen von Behälter und Werkstück nicht folgen kann. Abgesehen von ihrer trägen Fließbewegung steht die Füllung 7 in Relation zur schwingenden Rotorscheibe 3 quasi still, was in vorteilhafter Weise die Relativbewegung und damit den Materialabtrag maximiert.

Es sei noch angemerkt, daß der die Füllhöhe begrenzende, obere Behälterrand mit 19 bezeichnet ist.

Die steife/starre Befestigung des Bauteils im Behälter kann in der Weise modifiziert sein, daß eine freie oder motorisch erzwungene Drehung um die Bauteilachse möglich ist (ein Freiheitsgrad), was aber nichts an der behälterkonformen Schwing- und Taumelbewegung ändert. Eine Modifikation mit zusätzlicher Drehung ist - da leicht verständlich - nicht dargestellt.

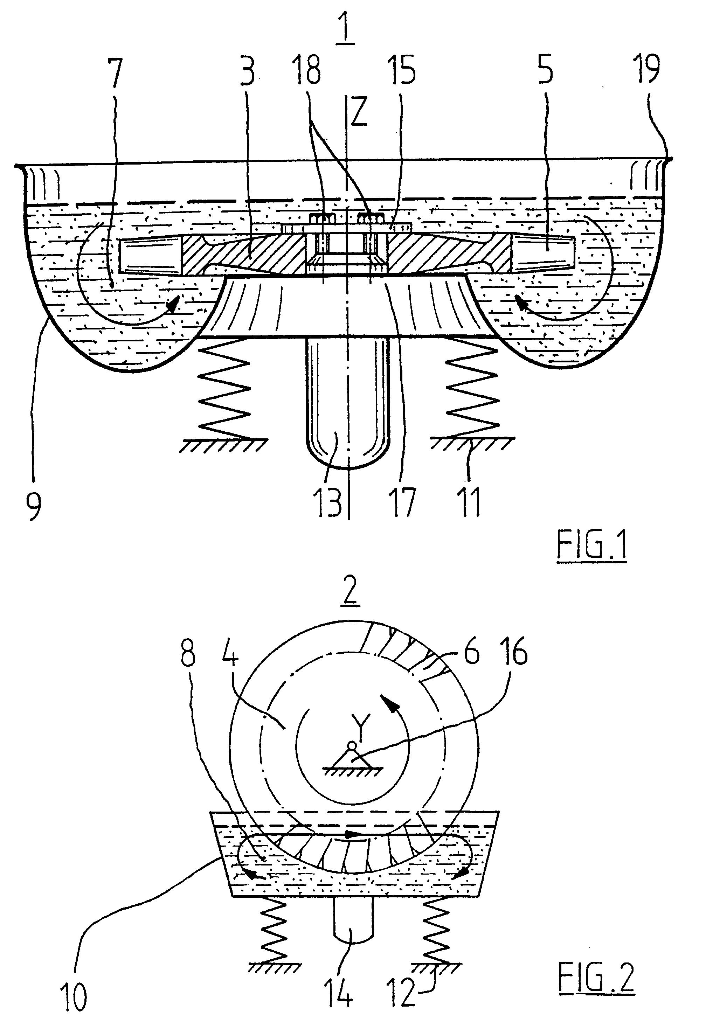

Figur 2 zeigt demgegenüber eine Anordnung 2 nach dem Stand der Technik, welche treffend als "Mühl"- oder "Wasserradanordnung" bezeichnet werden kann.

Man erkennt einen trogartigen Behälter 10, welcher - in Ansicht von oben - eine längliche, z.B. rechteckige Form aufweist. Auch hier sind eine schwingfähige Lagerung 12 sowie ein Unwuchtrotor mit Antrieb 14 vorhanden, um den Behälter 10 in eine definierte Schwingungsbewegung zu versetzen. In der abrasiven Füllung 8 stellt sich eine räumliche, kontinuierliche Fließbewegung ein, von der nur die Komponente in Behälterlängsrichtung - hier im wesentlichen von links nach rechts - mit Pfeilen angedeutet ist. In die Füllung 8 taucht von oben eine Rotorscheibe 4 mit Beschaufelung 6 teilweise ein, wobei eine Halterung 16 eine freie Drehung der Rotorscheibe 4 um ihre horizontal stehende Achse Y ermöglicht. Die Halterung 16 ist vom Behälter 10 mechanisch entkoppelt, so daß die Rotorscheibe 4 nur langsam dreht, aber nicht schwingt. Die Drehbewegung ergibt sich automatisch durch die als Antrieb wirkende Fließbewegung der Füllung 8 (Wasserradprinzip). Da de facto weder das Werkstück, noch die abrasive Füllung schwingt, ist hier nur eine sehr langsame, wenig effektive Relativbewegung für die Bearbeitung maßgeblich.

Abschließend sei noch angemerkt, daß Blisks zwar bevorzugte Bauteile für die fragliche Feinbearbeitung darstellen, daß aber auch eine Viefzahl anderer, rotationssymmetrischer Bauteile mit einer erfindungsgemäßen Anordnung bearbeitet werden kann. Es kann sich sowohl um rotierende Bauteile, wie "konventionelle" Rotorscheiben mit formschlüssiger Schaufelbefestigung oder Dichtungselemente, als auch um statische Bauteile, wie Leitschaufelkränze, Gehäuseteile etc., handeln.

## Patentansprüche

1. Anordnung zur Feinbearbeitung von rotationssymmetrischen, scheiben- . oder ringförmigen Bauteilen, vorzugsweise von Rotorscheiben mit integraler Beschaufelung, d.h. von sogenannten Blisks (Bladed Disks), durch Gleitschleifen, mit einem schwingfähig gelagerten, oben offenen Behälter, mit einem den Behälter in eine rotationsinduzierte Rüttelbewegung mit definierter Amplitude und Frequenz versetzenden Unwuchtrotor mit Antrieb, mit einer abrasiven Fülfung für den Behälter, umfassend eine Vielzahl von Schleifkörpern und eine physikalisch und/oder chemisch aktive Flüssigkeit, sowie mit einer Halterung, welche das Bauteil aufnimmt und zumindest teilweise in die abrasive Füllung eintauchen läßt, **dadurch gekennzeichnet,**
**daß** der Behälter (9) zumindest weitgehend rotationssymmetrisch ausgeführt und mit vertikaler Achse (Z) angeordnet ist,
**daß** im Behälter (9) eine Halterung (15) für ein Bauteil (3) in horizontal liegender Position angeordnet ist, wobei das Bauteil (3) unbeweglich, d.h. ohne Freiheitsgrad relativ zum Behälter (9) oder um die Bauteilachse drehbar aber sonst unbeweglich, d.h. mit nur einem Freiheitsgrad relativ zum Behälter (9) befestigt ist, und
**daß** der umlaufende, obere Behälterrand (19) auf einem vertikal höheren, horizontalen Niveau liegt, als die höchsten zu bearbeitenden Stellen eines an der Halterung (15) befestigten Bauteils (3), wobei die abrasive Füllung (7) zumindest die zu bearbeitenden Bereiche des Bauteils (3) vollständig bedeckt.

2. Anordnung nach Anspruch 1, **dadurch gekennzeichnet, daß** die Halterung (15) für das Bauteil (3) eine vom Behälterboden nach oben führende, geschlossene, podestartige Erhebung (17) umfaßt, und daß der Unwuchtrotor mit Antrieb (13) koaxial zur Behälterachse (Z) an der Behälterunterseite angeordnet ist.

3. Anordnung nach Anspruch 1 oder 2, **dadurch gekennzeichnet, daß** das Bauteil (3) über mindestens eine Schraubverbindung (18) behälterfest gespannt ist.

4. Anordnung nach Anspruch 1 oder 2, **dadurch gekennzeichnet, daß** die Halterung (15) für das Bauteil (3) eine freie und/oder eine motorisch angetriebene Drehbewegung zuläßt.

## Claims

1. Arrangement for finishing rotationally symmetrical, disc-shaped or annular prefabricated pieces, preferably rotor discs with integral blading, that is, so-termed blisks (bladed disks), by means of sliding smoothing, with a vessel which is open at the top and which is supported such that it can vibrate, with an imbalance rotor, with a drive, which moves the vessel in a rotalion-induced shaking motion with specific amplitude and frequency, with an abrasive filling material, for the vessel, comprising a plurality of grinding bodies and a physically and/or chemically active fluid, and with a holder which takes up the prefabricated piece and which can at least partially be lowered into the abrasive filling, **characterized in that**
- the vessel (9) is at least largely rotationally symmetrical and is disposed with a vertical axis (Z),
- a holder (15) for a prefabricated piece (3) is disposed in a horizontally lying position, whereby the prefabricated piece (3) is attached such that it cannot move, that is, without an axis of freedom in relation to the vessel (9), or able to rotate about the axis of the prefabricated piece but otherwise fixed, that is, attached with only a degree of freedom in relation to the vessel (9), and
- the circulating upper rim (19) of the vessel lies on a vertically higher horizontal level than the highest points of a prefabricated piece (3) to be finished attached to a holder (15), whereby the abrasive filling (7) at least fully covers the areas of the prefabricated piece (3) to be finished.

2. Arrangement in accordance with claim 1, **characterized in that** the holder (15) for the prefabricated piece (3) comprises a closed, platform-like projection (17) rising upwards from the base of the vessel, and **in that** the imbalance rotor with a drive (13), is disposed coaxially in relation to the axis of the vessel (Z) on the underside of the vessel.

3. Arrangement in accordance with claim 1 or 2, **characterized in that** the prefabricated piece (3) is held under tension, fast in relation to the vessel, by means of a bolt connection (18).

4. Arrangement in accordance with claim 1 or 2, **characterized in that** the holder (15) allows a free and/or a motor-driven rotational movement for the prefabricated piece.

## Revendications

1. Dispositif pour l'usinage de précision de composants à symétrie de révolution, en forme de disque ou d'anneau, de préférence de disques de rotor à ailettage intégré, c'est-à-dire de ce que l'on appelle des Blisks (Bladed Disks), par abrasion par frottement glissant, avec un récipient ouvert en partie haute, monté de façon à pouvoir osciller, avec un rotor à balourd mettant le récipient en un mouvement de secouement induit par la rotation, avec une amplitude et une fréquence définies, le rotor à balourd comportant un entraînement, avec un remplissage abrasif pour le récipient, comprenant une pluralité de corps abrasifs et un liquide actif physiquement et/ou chimiquement, ainsi qu'avec une fixation qui supporte le composant et peut être immergée au moins partiellement dans le remplissage abrasif, **caractérisé en ce que** :
• le récipient (9) est réalisé au moins largement selon une symétrie de révolution et est disposé avec un axe (Z) vertical,
• dans le récipient (9) est disposée une fixation (15) pour un composant (3) placé en position horizontale, le composant (3) étant fixé de façon immobile, c'est à-dire sans aucun degré de liberté par rapport au récipient (9) ou en pouvant tourner autour de l'axe de composant mais en étant par ailleurs immobile, c'est-à-dire en n'ayant qu'un seul degré de liberté par rapport au récipient (9), et
• le bord supérieur de récipient (19), faisant le pourtour, est situé à un niveau horizontal qui est verticalement plus élevé que les points à usiner les plus hauts d'un composant (3) fixé sur la fixation (15), le remplissage abrasif (15) recouvrant complètement au moins les zones à usiner du composant (3).

2. Dispositif selon la revendication 1, **caractérisé en ce que** la fixation (15) du composant (3) comprend un bossage (15) du genre dune plate-forme, fermé, allant du fond de récipient vers le haut, et **en ce que** le rotor à balourd avec l'entraînement (13) est disposé sur la face inférieure de récipient, coaxialement par rapport à l'axe de récipient (Z).

3. Dispositif selon la revendication 1 ou 2, **caractérisé en ce que** le composant (3) est serré fermement de façon fixe par rapport au récipient, par l'intermédiaire d'au moins une liaison vissée (18).

4. Dispositif selon la revendication 1 ou 2, **caractérisé en ce que** la fixation (15) du composant (3) permet d'avoir un mouvement rotatif libre et/ou entraîné par moteur.
